# EUROPEAN PATENT SPECIFICATION

(11) **EP 4 687 596 B1**
(45) Date of publication and mention of the grant of the patent: **19.08.2026**
(21) Application number: 24718602.6
(22) Date of filing: 03.04.2024
(51) Int. Cl.: A47J 31/54

(54) **ELECTROMAGNETIC INDUCTION CONTINUOUS-FLOW FLUID HEATER FOR AN AUTOMATIC BEVERAGE VENDING MACHINE**
DURCHLAUFERHITZER MIT ELEKTROMAGNETISCHER INDUKTION FÜR EINEN GETRÄNKEVERKAUFSAUTOMATEN
DISPOSITIF DE CHAUFFAGE DE FLUIDE À ÉCOULEMENT CONTINU PAR INDUCTION ÉLECTROMAGNÉTIQUE POUR DISTRIBUTEUR DE BOISSONS AUTOMATIQUE

(30) Priority: 04.04.2023 IT 202300006612
(43) Date of publication of application: 11.02.2026
(73) Proprietor: VEA GROUP S.P.A., 24121 Bergamo (IT)
(72) Inventor: IEMMA, Lorenzo, 24040 Chignolo d'Isola (BG) (IT); DOGLIONI MAJER, Umberto, 24040 Chignolo d'Isola (BG) (IT); CERIANI, Alessandro, 24040 Chignolo d'Isola (BG) (IT)
(74) Representative: Studio Torta S.p.A.
(86) International application number: PCT/IB2024/053228
(87) International publication number: WO 2024/209357

(56) References cited:
- WO-A1-2004/062320
- CN-A- 1 844 777
- US-A1- 2022 191 980

## Description

### Technical Field

This invention relates, in general, to the sector of automatic beverage vending machines and, specifically, to a heater of a fluid, in particular a food liquid like, for example, water or milk, by electromagnetic induction in an automatic vending machine for hot beverages based on anhydrous material, such as coffee, tea, chocolate, or the like, to which the discussion that follows will refer without any loss of generality thereby.

### Prior Art

Machines for preparing and distributing beverages, in particular hot beverages based on an anhydrous material, like coffee, tea, chocolate, or the like, are known.

These machines are provided with one or more heaters for a fluid, in particular a food liquid, such as water or milk, usually made in two types: accumulation heaters (boilers, kettles) and fluid or continuous flow heaters.

Belonging to the latter type are devices that heat the fluid according to two main technologies: heating via a resistance heating element, very widespread in the sector, and heating via electromagnetic induction, less widespread in the sector compared to the previous one.

According to the first technology, electric potential difference is applied to the ends of the heating element, which is directly or indirectly brushed by the flow of fluid to heat. An electric current is, thus, generated within the heating element that, due to the Joule effect, dissipates energy in the form of heat, heating the fluid via conduction.

An example of a heater of this type is described in GB-A-2542359.

EP-A-204-4869 describes three embodiments of a flow through water heater. The first two embodiments illustrated herein entail respective fluid heaters using the first technology (heating via resistance element), while the third embodiment illustrates, in a relatively simple and not very detailed manner, a heater that heats water using the above-mentioned second technology (heating via electromagnetic induction).

In accordance with this second technology, the phenomenon of electromagnetic induction is used to heat the flow of fluid.

In particular, fluid heaters are known that exploit electromagnetic induction to generate parasitic currents inside a conduit made of electrically conductive material and inside of which the fluid to heat flows. Parasitic currents dissipate energy, due to the Joule effect, in the form of heat, thus heating the conduit and, as a result, the fluid that flows in contact with it.

It is known that electromagnetic induction fluid heaters are particularly advantageous since they heat the fluid up quickly.

EP-A-2868242 illustrates a water heater comprising a metal conduit wound in a spiral and housed coaxially in a cavity of a spool made of electrically insulating material and on which an electromagnetic induction winding is wound.

The winding is powered with alternating current, which generates, via electromagnetic induction, parasitic currents that heat, via the Joule effect, the spiral-shaped metal conduit and, thus, the water that flows inside.

The spool is attached to the machine's support structure, while the metal conduit does not have mechanical attachments to the spool, being simply supported by the hydraulic circuit that it is connected to via simple quick-coupling connectors.

More specifically, the metal conduit and the spool are radially separated by a free space (or "gap" of air).

CN-A-1844777, US-A-2022191980 and WO-A-2004062320 describe additional examples of electromagnetic induction flow through water heaters.

### Subject and Summary of the Invention

Although fluid heaters of the type described above represent a functionally valid option for heating the fluid in machines configured for the preparation and distribution of a hot beverage, the Applicant has been able to establish that the known heaters can be further improved, in particular as far as regards the efficacy of thermal exchange that can be obtained.

The purpose of this invention is to provide an electromagnetic induction flow through heater that is highly reliable and inexpensive, and makes it possible to meet the need specified above and connected to known electromagnetic induction heaters.

According to the invention, this purpose is achieved with an electromagnetic induction fluid heater as claimed in the attached claims.

### Brief Description of the Drawings

Figure 1 schematically illustrates and with parts removed for clarity an automatic beverage vending machine comprising an electromagnetic induction fluid heater according to this invention;
Figures 2a-2b are schematic side views, in partial cross-section, on an enlarged scale, and with parts removed for clarity of the heater in Figure 1 according to a first embodiment of this invention;
Figure 3a is a schematic side view, in partial cross-section, on an enlarged scale, and with parts removed for clarity of the heater in Figure 1 according to a second embodiment of this invention;
Figure 3b is a perspective view, on an enlarged scale, and with parts removed for clarity of an insert of the heater in Figure 3a;
Figure 4a is a schematic side view, in partial cross-section, on an enlarged scale, and with parts removed for clarity of the heater in Figure 1 according to a third embodiment of this invention;
Figure 4b is a perspective view, on an enlarged scale, and with parts removed for clarity, of an insert of the heater in Figure 4a;
Figure 5a is a schematic side view, in partial cross-section, on an enlarged scale, and with parts removed for clarity of the heater in Figure 1 according to a fourth embodiment of this invention;
Figure 5b is a perspective view, on an enlarged scale, and with parts removed for clarity of an insert of the heater in Figure 5a;
Figure 6 is a schematic side view, in partial cross-section, on an enlarged scale, and with parts removed for clarity, of the heater in Figure 1 according to a fifth embodiment of this invention;
Figure 7 is a schematic side view, in partial cross-section, on an enlarged scale, and with parts removed for clarity, of the heater in Figure 1 according to a sixth embodiment of this invention; and
Figure 8 is a schematic side view, in partial cross-section, on an enlarged scale, and with parts removed for clarity of the heater in Figure 1 according to a seventh embodiment of this invention.

### Detailed Description of Preferred Embodiments of the Invention

This invention will now be described in detail with reference to the figures attached to enable a person skilled in the art to produce it and use it. Various modifications to the described embodiments will be readily apparent to those skilled in the art and the general principles described may be applied to other embodiments and applications without however departing from the protective scope of this invention as defined in the appended claims.

Unless otherwise defined, all technical and scientific terms used herein have the same meaning commonly understood by one of ordinary skill in the art to which the invention belongs. In case of conflict, the present specification, including the definitions provided, will control. In addition, the examples are provided purely for illustrative purposes and, as such, must not be considered as limiting.

In order to facilitate understanding of the embodiments described herein, reference will be made to some specific embodiments and a specific language will be used to describe the same. The terminology used herein is used for the purpose of describing particular embodiments only, and is not intended to limit the scope of the present invention.

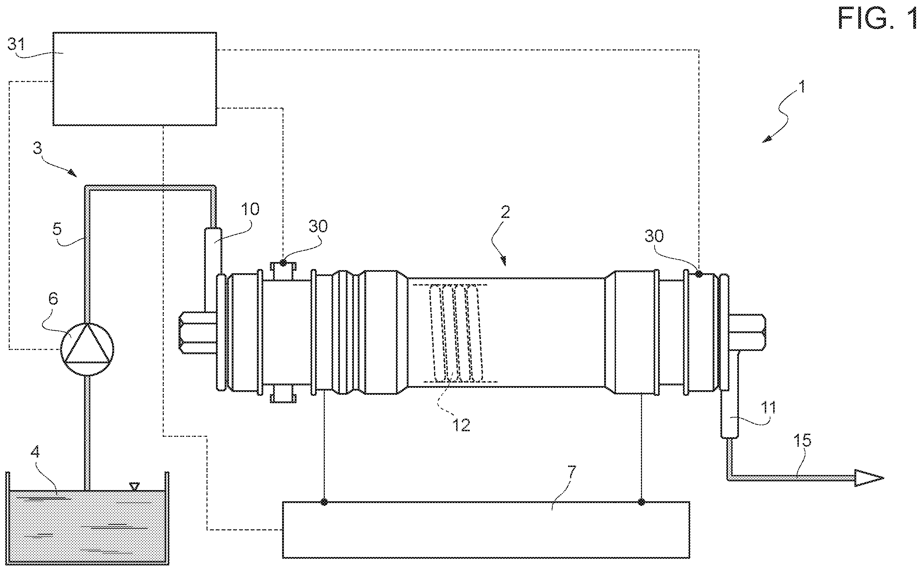

With reference to Figure 1, reference number 1 schematically identifies as a whole an automatic machine for preparing and distributing beverages, in particular hot beverages based on an anhydrous material, like coffee, tea, chocolate, or the like.

The machine 1 comprises:
- an electromagnetic induction continuous-flow fluid heater 2;
- a fluidic feeding circuit 3 (schematically illustrated) provided with a recipient 4 configured to contain the fluid, in particular water, preferably water at room temperature, and to convey a flow of fluid from the recipient 4 towards the heater 2 via piping 5 and a hydraulic pump 6; and
- an electric circuit 7 (schematically illustrated), whose function will be clarified below.

Specifically, the heater 2 is electrically connected to the electric circuit 7 and is fluidically connected to the hydraulic circuit 3.

According to the invention, the fluid used by the heater 2 is preferably, though in a non-limiting way, water. Therefore, reference will be made below to water as the fluid to heat fed to the heater 2, without any loss of generality thereby.

Alternatively, the heater 2 can operate with other food liquids commonly used in automatic machines for preparing and distributing hot beverages, for example cow's milk, plant milk (i.e. oat, soy, rice milk, etc.) or the like.

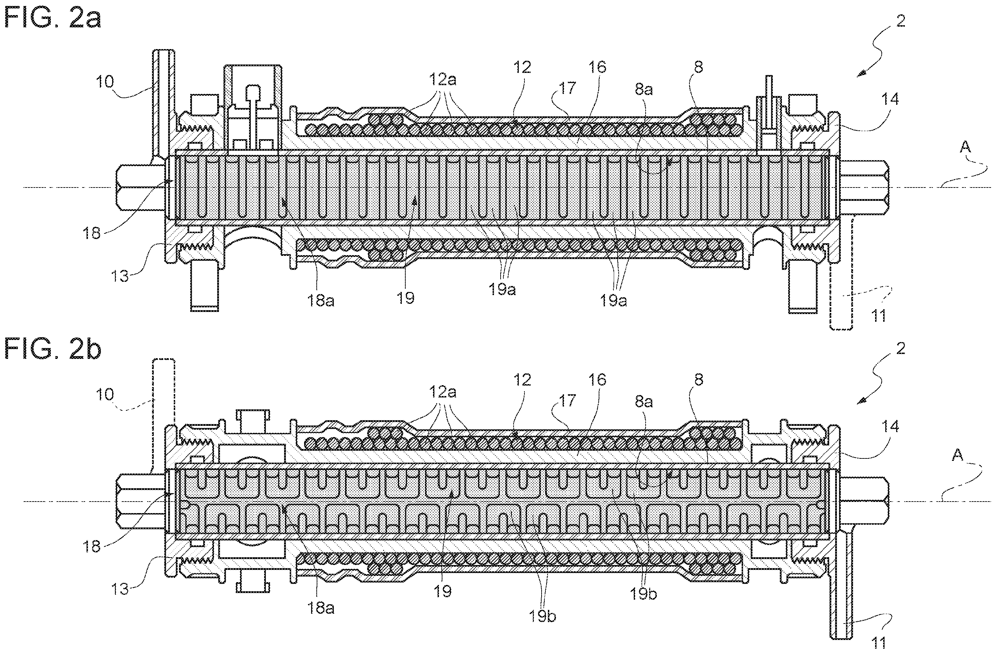

Figures 2a and 2b show the heater 2 according to a first preferred embodiment of this invention.

As can be seen in Figure 2a, the heater 2 basically comprises a tubular body 8 having a longitudinal axis A and including at least one inlet 10, in particular a through inlet, configured to receive the flow of fluid (of water) to be heated from the recipient 4 and to feed it inside the tubular body 8, and an outlet 11, in particular a through outlet, through which the heated flow of fluid flows out, in use, from the tubular body 8.

According to this preferred and non-limiting embodiment, the tubular body 8 has a basically hollow cylindrical shape and the axis A is straight. In addition, the tubular body 8 is attached to an inner support structure (not illustrated) of the machine 1, according to a known method not described in detail.

To this end, the heater 2 comprises a first end portion 13 and a second end portion 14, arranged on axially opposite sides of the tubular body 8, fixed to the tubular body 8 and designed to be coupled to the inner support structure of the machine 1.

In particular, the first end portion 13 and the second end portion 14 define respective (axial) closing flanges 13, 14 of the tubular body 8 and comprise, respectively, the inlet 10 and the outlet 11.

Therefore, according to the non-limiting example described, the inlet 10 and the outlet 11 are located on axially opposite sides of the tubular body 8 and, therefore, of the heater 2.

In an alternative embodiment not illustrated, the inlet 10 and the outlet 11 could be arranged on the same side as the heater 2, for example at the flange 13 or 14.

More specifically, the inlet 10 and the outlet 11 are defined by respective hollow protuberances radially projecting from the first end portion, i.e. from the flange 13, and from the second end portion, i.e. from the flange 14, respectively.

Alternatively, the inlet 10 and the outlet 11 could be defined by protuberances projecting axially from the respective flanges 13, 14.

In the example illustrated, the outlet 11 is fluidically connected with an outlet 15 piping (Figure 1). This outlet 15 piping is configured to convey the heated water from the heater 2 to a beverage production chamber (not illustrated), where the heated water brushes the anhydrous material, usually contained in a previously perforated capsule. The beverage thus obtained, is thus conveyed from the production chamber to a distributor (also not illustrated), by means of which it is expelled from the machine 1.

The heater 2 comprises, in addition, an electrical winding 12 arranged around, or wound around, the tubular body 8, coaxially to the axis A, and able to be electrically powered to generate an electromagnetic induction field.

Specifically, the winding 12 is defined by multiple, successive, concentric spirals 12a wound on the outer surface of a hollow support spool 16 that is basically cylindrical, mounted coaxially to the tubular body 8. In other words, the tubular body 8 is housed, at least partially, in the axial cavity defined inside the support spool 16.

In more detail, the support spool 16 is made of an electrically non-conductive material, i.e. with zero magnetic susceptibility.

The winding 12 is configured to be fed with an alternating current at a certain oscillation frequency and to generate, in this way, the above-mentioned electromagnetic induction field.

Opportunely, the tubular body 8 is made of an electrically (and magnetically) conductive material and is, thus, configured to heat, via electromagnetic induction due to the electromagnetic induction field generated via the above-mentioned powering of the winding 12. In other words, the winding 12 defines a solenoid.

Conveniently, a layer of thermally insulating material (not illustrated) is radially interposed between the support spool 16 and the outer surface of the tubular body 8 so as to avoid, in use, the transmission of heat via conduction from the tubular body 8 to the support spool 16.

In one embodiment, the tubular body 8 could be co-moulded (over-moulded) with the spool 16.

In another embodiment, the winding 12 is directly wound on the tubular body 8, with just the interposition of the layer of insulating material.

In another embodiment, the winding 12 is wound directly on the tubular body 8.

The heater 2 preferably comprises a protective sleeve 17 arranged coaxially around the winding 12 so that the winding 12 axially engages the sleeve 17.

The sleeve 17 acts as a protective element for the winding 12 and is preferably made of an electrically non-conductive material, i.e. with zero magnetic susceptibility.

As can be seen in Figure 1, the machine 1 also comprises a number of temperature sensors 30, in the example described two temperature sensors 30, each arranged at the inlet 10 and the outlet 11, respectively, and configured to detect the temperature of the water in the respective action zone.

The machine 1 also comprises a control unit 31 configured to receive the temperature values detected by the temperature sensors 30 and to control, as a result, the activation of the electrical circuit 7.

As can be seen in Figures 2a and 2b, the heater 2 also comprises:
- a non-calorigenic - i.e. non heat generating - insert 18 made of electrically non-conductive material with zero magnetic susceptibility, which axially engages the tubular body 8 (in particular housed inside the tubular body 8), more specifically coaxially to the axis A, and extends along the axis A; and
- a flow channel 19 for the fluid (i.e. for the water) which fluidically connects the inlet 10 with the outlet 11 and is delimited by the outer lateral surface 18a of the insert 18 and the inner lateral surface 8a of the tubular body 8.

Specifically, the outer surface 18a is defined by the outer lateral surface 18a of the insert 18, in relation to the axis A. The inner surface 8a is defined by the inner lateral surface 8a of the tubular body 8, in relation to the axis A.

In practice, the outer surface 18a radially faces the inner surface 8a.

In particular, the flow channel 19 is defined by a continuous groove formed on the outer surface 18a of the insert 18 and closed above (according to the direction radial to the axis A) by the inner surface 8a of the tubular body 8.

In other words, the flow channel 19 is partially delimited by the insert 18 and the tubular body 8.

Conveniently, the groove defining the flow channel 19 defines a "valley" of the outer surface 18a of the insert 18, while the "full" material on this surface 18a defines one or more "ridges" of the surface 18a, which cooperate in contact (and preferably in a fluid-tight manner) with the inner surface 8a of the tubular body 8. In this way, the water that flows in use within the flow channel 19 remains inside the flow channel 19 itself, without noticeable leakage or, in any case, limiting the fluid leakage as much as possible.

According to the invention, the flow channel 19 extends around the axis A and along a trajectory that proceeds, at least in part, from the inlet 10 towards the outlet 11, in a zigzag pattern or zigzagging.

In the example described, the above-mentioned trajectory proceeds zigzagging starting from the inlet 10 to the outlet 11, or, more precisely, for the whole longitudinal extension of the insert 18 and of the flow channel 19.

More specifically, the flow channel 19 extends and, in particular, the above-mentioned groove formed on the outer surface 18a extends, along a trajectory with turns, preferably sharp ones, alternating according to opposite orientations (or directions or travel trajectories).

In other words, the above-mentioned trajectory is composed of alternating turns in opposite directions.

According to the preferred and non-limiting embodiment illustrated in Figures 2a and 2b, the flow channel 19 comprises a series of transverse sectors 19a, which are transverse and, in particular, orthogonal (i.e. oriented perpendicularly in relation to) the axis A and respectively interspersed with elbow sectors 19b, preferably basically parallel to the axis A.

Specifically, each transverse sector 19a is preceded and followed by respective elbow sectors 19b.

More specifically, as shown in Figure 2b, each transverse sector 19a is fluidically connected to transverse sectors 19a immediately adjacent respectively via an elbow sector 19b upstream and an elbow sector 19b downstream (in relation to the forward direction of the fluid).

In this way, the succession of transverse sectors 19a and of elbow sectors 19b from the inlet 10 towards the outlet 11 defines the above-mentioned zigzag trajectory.

In this way, the orientations of the flow of fluid that flows within the flow channel 19, in use and in relation to the axis A, are opposite in each pair of successive transverse sectors 19a.

The insert 18 preferably has a basically cylindrical shape having the axis A as its central axis.

As a result, each transverse sector 19a extends circumferentially around the axis A, thereby defining an arc-shaped stretch of said trajectory around the axis A and oriented transversely, in particular orthogonally, with respect to the axis A.

Therefore, thanks to the configuration of the flow channel 19 according to this invention, the fluid is configured to flow along each respective transverse sector 19a in the opposite direction to the direction of the fluid flow of the transverse sectors 19a immediately adjacent to the respective transverse sector 19a and in the same direction as that of the fluid flow of the transverse sectors 19a following and preceding those immediately adjacent.

In light of the above, the flow channel 19 defines a zigzag-shaped passage, i.e. comprising sharp, alternating turns according to opposite orientations, heating the fluid, in particular the water, that flows through the heater 2. In other words, the fluid flow proceeds with opposite orientations that alternately change, breaking up and defining a series of elbow angles (at the elbow sectors 19b).

Thanks to this configuration, the fluid completes a path within the tubular body 8 of a length significantly greater than that in which the fluid flow flows axially in a linear way inside the tubular body 8.

This enables a greater thermal exchange time interval (and, thus, more effective heating) and a precise control of the temperature of the water.

In addition, the zigzag trajectory (which can also be defined as a "labyrinth"), with the alternating of straight sections (the transverse sectors 19a) and sharp, curved deviations (the elbow sectors 19b), increases the turbulence of the fluid flow inside the flow channel 19, both in the example in which the flow of fluid flows axially in a linear way inside the tubular body 8 and in the example in which the flow of fluid flows helically or in a spiral.

As a result, the Applicant observed, via an extended experimental campaign, that the establishment of a turbulent motion, or, in any case, the increase in the degree of turbulence of the fluid flow inside the flow channel 19, increases the efficiency of thermal exchange between the tubular body 8 heated via electromagnetic induction by the winding 12 and the fluid that flows inside the flow channel 19.

The shape of the flow channel 19 tends, in addition, to cause the fluid to slow down locally, thus increasing the acquisition of heat by the same.

The operation of the heater 2, according to this invention will be described below, with particular reference to an initial condition wherein the flow of fluid is fed to the tubular body 8 through the inlet 10.

In this condition, the fluid flow runs through the flow channel 19, being repeatedly deviated at the elbow sectors 19b, thus assuming, on a case-by-case basis, an opposite orientation to the previous one, alternately.

At the same time, the winding 12 is powered by means of the control unit 31 that controls the activation of the electric circuit 7. The tubular body 8 is heated via electromagnetic induction and the fluid that flows through the flow channel 19 is, as a result, heated via conduction, since it brushes the inner surface 8a of the tubular body 8.

At this point, the fluid leaves through the outlet 11. The process is repeated for each beverage to be prepared.

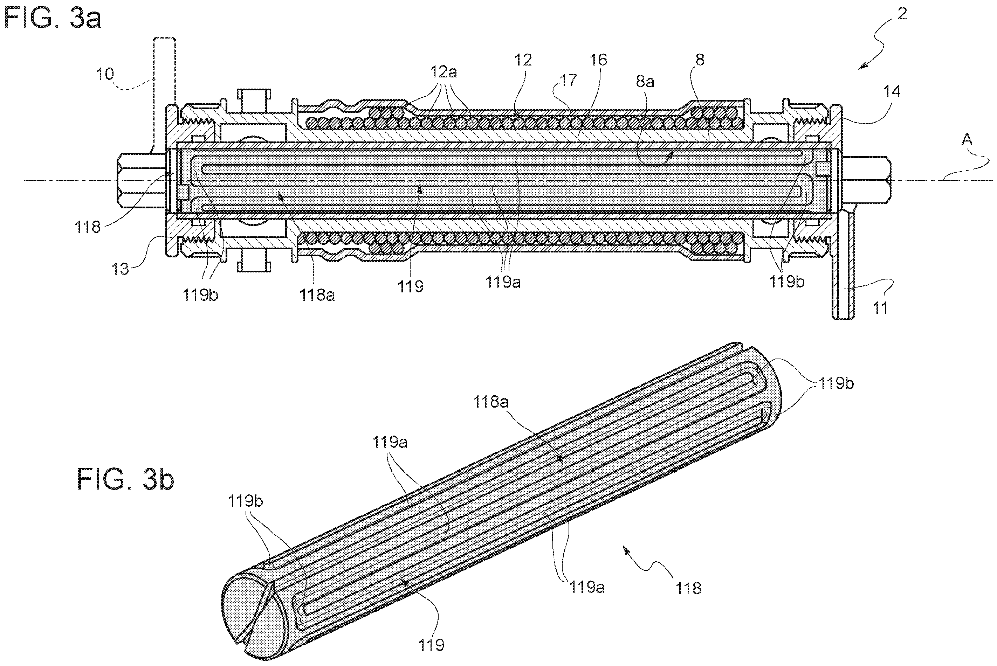

With reference to Figures 3a and 3b, a second preferred embodiment of the heater 2 will now be described according to this invention, for which only the differences with the heater 2 according to the first embodiment will be described and indicating, where possible, similar or the same components or parts with the same reference numbers.

The components not explicitly described are to be considered equal, according to form and/or function, to those of the heater 2 described above.

The heater 2, according to this second embodiment, comprises an insert 118 different to the insert 18 and defining a flow channel 119 different to the channel 19.

In particular, the insert 118 has a configuration so that the flow channel 119 extends around the axis A (as can clearly be seen in Figure 3b) and comprises a series of straight sectors 119a extending parallel to the axis A (i.e. longitudinally) and respectively interspersed by elbow sectors 119b that are transverse, in particular orthogonal, to the axis A.

Specifically, each straight sector 119a is preceded and followed by respective elbow sectors 119b.

More specifically, each straight sector 119a is fluidically connected to immediately adjacent straight sectors 119a, respectively, via an elbow sector 119b upstream and an elbow sector 119b downstream (in relation to the forward direction of the fluid).

In this way, the succession of straight sectors 119a and of elbow sectors 119b from the inlet 10 towards the outlet 11 defines the above-mentioned zigzag trajectory.

In this way, the orientations of the flow of fluid that flows within the flow channel 19, in use and in relation to the axis A, are opposite in each pair of successive straight sectors 119a.

For example, with reference to Figure 3a, if in a given straight sector 119a the water flows from left to right in the figure, in the fluidically successive sector 119a it will flow from right to left, and so on, alternately.

The insert 118 also preferably has a basically cylindrical shape having the axis A as its central axis.

As a result, each elbow sector 119b extends circumferentially around the axis A, thereby defining an arc-shaped stretch of said trajectory around the axis A and oriented transversely, in particular orthogonally, with respect to the axis A.

Therefore, thanks to the configuration of the flow channel 119, the fluid is configured to flow along each respective straight sector 119a in the opposite direction to the direction of the flow of fluid in the straight sectors 119a immediately adjacent to the respective straight sector 119a.

The configuration of the flow channel 119 in accordance with this second embodiment of this invention makes it possible to achieve the advantages described above and connected with a zigzag configuration of the flow channel 119.

In addition, the Applicant has observed how the increase in turbulence within the fluid flow is greater than the previous example (due to the greater length of the sectors 119a compared to the sectors 19a). Thus, the efficiency of thermal exchange is additionally improved.

It should be specified that, by suitably configuring the flow channel 119, i.e. an adequate number and length of the sectors 119a and 119b, the inlet 10 and the outlet 11 could be arranged at the same axial end as the heater 2.

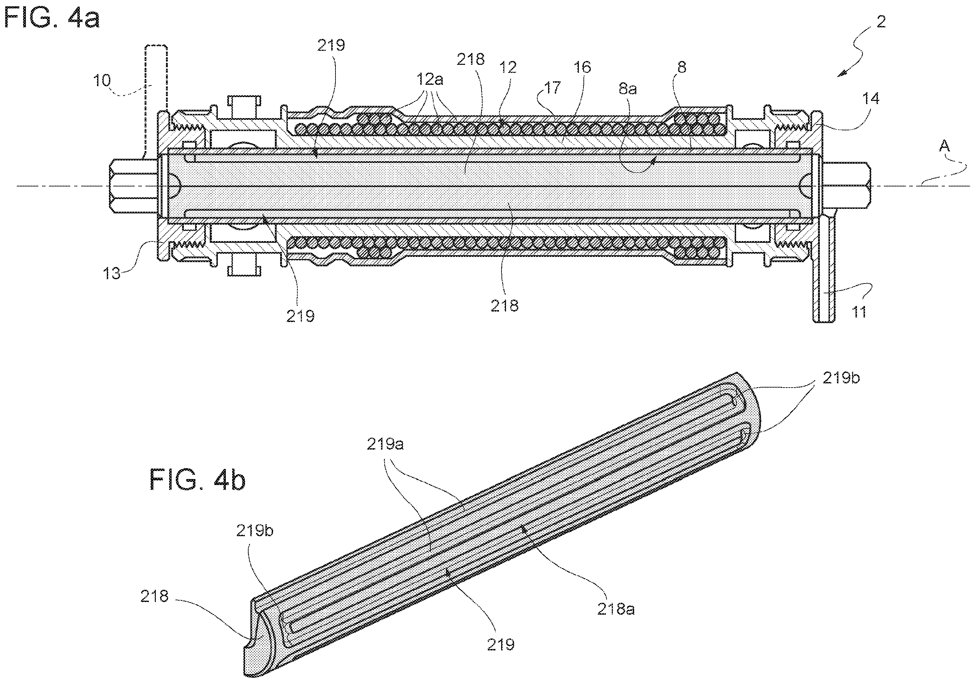

With reference to Figures 4a and 4b, a third preferred embodiment of the heater 2 will now be described according to this invention, for which only the differences with the heater 2 according to the second embodiment will be described and indicating, where possible, similar or the same components or parts with the same reference numbers.

The components not explicitly described are to be considered equal, according to form and/or function, to those of the heater 2 described above.

The heater 2 in accordance with this third embodiment comprises at least two inserts 218 housed inside the tubular body 8 and extending along the axis A.

Each insert 218 has a basically semi-cylindrical shape.

The inserts 218 are radially arranged adjacent to each other inside the tubular body 8, so as to form a single, basically cylindrical body with axis A.

Each insert 218 defines a respective flow channel 219 of the same type as the channel 119 described previously.

Therefore, the heater 2 according to the third embodiment differs from the heater 2 according to the second embodiment in that it comprises two semi-cylindrical inserts 218, arranged symmetrically in relation to the axis A and because it includes two flow channels 219 that extend parallel from the inlet 10 to the outlet 11.

Specifically, each flow channel 219 comprises a series of straight sectors 219a (of the same type as the sectors 119a) interspersed by elbow sectors 219b (of the same type as the sectors 119b).

Therefore, the flow channels 219 extend according to a configuration in parallel.

In this way, the fluid flows, in use, from the inlet 10 towards the outlet 11 along at least two said zigzag trajectories in parallel.

The configuration of each flow channel 219 in accordance with this third embodiment of this invention makes it possible to achieve the advantages described above and connected with a zigzag configuration.

In addition, this configuration makes it possible to obtain a greater fluid flow rate, which is preferable in some applications.

It should be specified that there could be more than two inserts 218, each insert 218 defining a cylindrical sector or a "segment" within the tubular body 8. Thus, there could be more than two channels 219 in parallel, with a resulting increase in fluid flow rate.

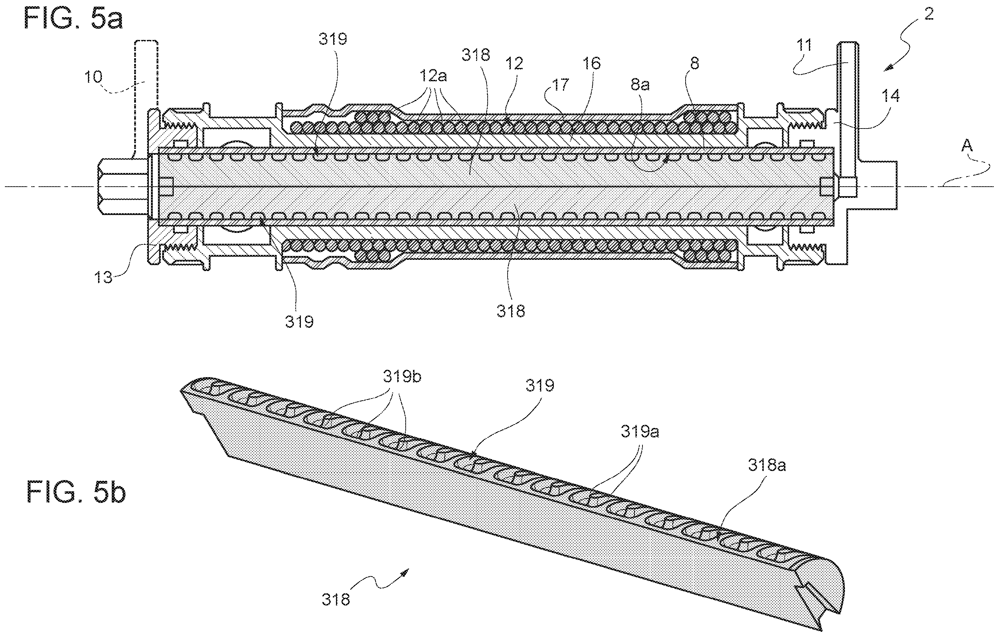

With reference to Figures 5a and 5b, a fourth preferred embodiment of the heater 2 will now be described according to this invention, for which only the differences with the heater 2 according to the third embodiment will be described and indicating, where possible, similar or the same components or parts with the same reference numbers.

The components not explicitly described are to be considered equal, according to form and/or function, to those of the heater 2 described above.

The heater 2 in accordance with this fourth embodiment comprises at least two inserts 318 housed inside the tubular body 8 and extending along the axis A.

Each insert 318 basically corresponds to an insert 218 of the type described above, with the difference that each insert 318 defines a flow channel 319 of the same type as the channel 19 described above.

Specifically, each flow channel 319 comprises a series of transverse sectors 319a (of the same type as the sectors 19a) interspersed by elbow sectors 319b (of the same type as the sectors 19b).

Therefore, the flow channels 319 extend according to a configuration in parallel.

In this way, the fluid flows, in use, from the inlet 10 towards the outlet 11 along at least two said zigzag trajectories in parallel.

The configuration of each flow channel 319 according to this fourth embodiment of this invention makes it possible to achieve the advantages described above and connected with a zigzag configuration.

In addition, this configuration makes it possible to obtain a greater fluid flow rate, which is preferable in some applications.

It should be specified that there could be more than two inserts 318, each insert 318 defining a cylindrical sector or a "segment" within the tubular body 8. Thus, there could be more than two channels 219 in parallel, with a resulting increase in fluid flow rate.

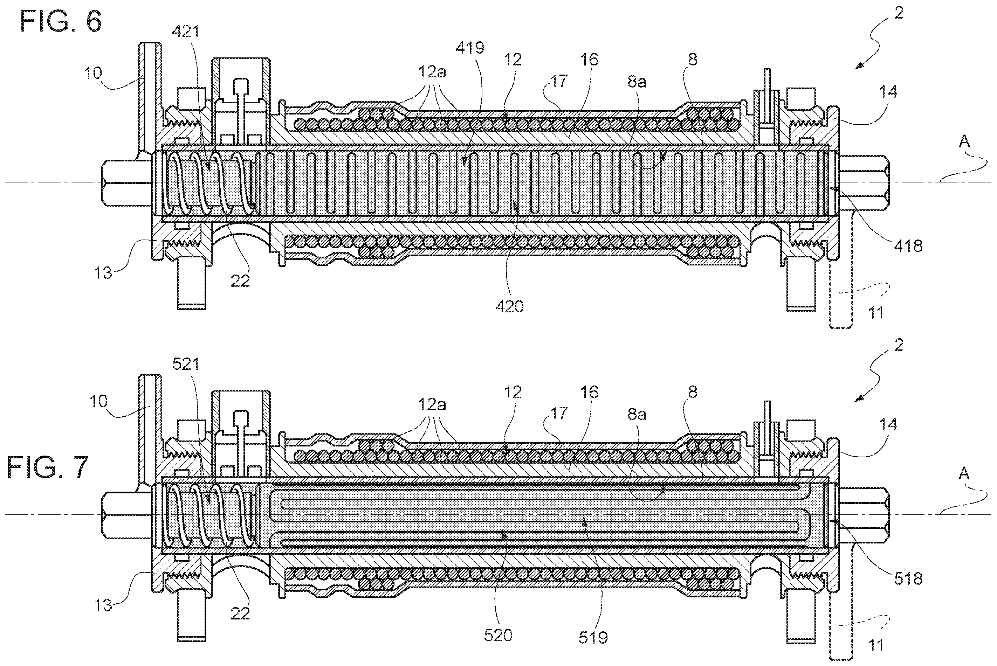

With reference to Figure 6, a fifth embodiment of the heater 2 will now be described according to this invention, for which only the differences with the heater 2 according to the first embodiment will be described and indicating, where possible, similar or the same components or parts with the same reference numbers.

The components not explicitly described are to be considered equal, according to form and/or function, to those of the heater 2 described above, in accordance with the first embodiment.

The heater 2 in accordance with this fifth embodiment includes an insert 418 that defines, together with the tubular body 8 and as described above, a flow channel 419.

The insert 418 comprises a first portion 420, along which the trajectory of the flow channel 419 proceeds in a zigzag pattern or zigzagging (as described above), and a second portion 421, along which the trajectory of the flow channel proceeds helically around the axis A.

In particular, the first portion 420 basically corresponds to the insert 18 of the heater 2 according to the first embodiment: this first portion 420 thus includes a series of transverse sectors interspersed by elbow sectors so as to define said zigzag trajectory, with the above-mentioned advantages that result.

Advantageously, the heater 2 according to this fourth embodiment comprises a helical spring 22 housed inside the tubular body 8, arranged around the second portion 421 and interposed between the tubular body 8 and the second portion 421, with respect to a direction orthogonal to the axis A (radial direction).

The second portion 421 is preferably arranged at the inlet 10, thus defining an initial part of the flow channel 419.

According to an alternative embodiment not illustrated, the second portion 421 could be arranged at the outlet 11, to define an end part of the flow channel 419.

The flow channel 419 along the second portion 421 is delimited, with respect to the radial direction, below by the outer surface of the insert 418, above by the inner surface 8a of the tubular body 8, and laterally by the helical spring 22.

Advantageously, the spring 22 is arranged, in use inside the tubular body 8, in a compressed condition with a predetermined preload.

More precisely, the spring 22 is arranged compressed and preloaded abutting against the flange 13 and pushes the insert 418 against the second flange 14.

In this way, removing the second flange 14, for example for maintenance and/or cleaning, arranges the spring 22 in an expanded condition and causes the insert 418 to at least partially exit the tubular body 8.

The extraction of the insert 418 is, thus, facilitated.

If the flange 13 is removed, the extraction of the spring 22 is facilitated.

Thanks to this configuration, it is possible to obtain a heater 2 wherein the efficiency of thermal exchange is improved (due to the presence of the zigzag flow channel 419) and, furthermore, maintenance ease is increased (due to the presence of the spring 22).

With reference to Figure 7, a sixth preferred embodiment of the heater 2 will now be described according to this invention, for which only the differences with the heater 2 according to the fifth embodiment will be described and indicating, where possible, similar or the same components or parts with the same reference numbers.

The components not explicitly described are to be considered equal, according to form and/or function, to those of the heater 2 described above.

The heater 2 according to the sixth embodiment includes an insert 518 that defines, together with the tubular body 8 and as described above, a flow channel 519.

The insert 518 basically corresponds to the insert 418 described above and, thus, includes a first portion 520, along which the trajectory of the flow channel 519 proceeds in a zigzag pattern or zigzagging, and a second portion 521, along which the trajectory of the flow channel proceeds helically around the longitudinal axis A.

The difference between the insert 518 and the insert 418 lies in the fact that the first portion 520 basically corresponds to the insert 118 of the heater 2 according to the second embodiment: this first portion 520 thus includes a series of straight sectors interspersed by elbow sectors so as to define said zigzag trajectory, with the above-mentioned advantages that result.

Thanks to this configuration, it is possible to obtain a heater 2 wherein the efficiency of thermal exchange is improved (due to the presence of the zigzag flow channel 519) and, furthermore, maintenance ease is increased (due to the presence of the spring 22).

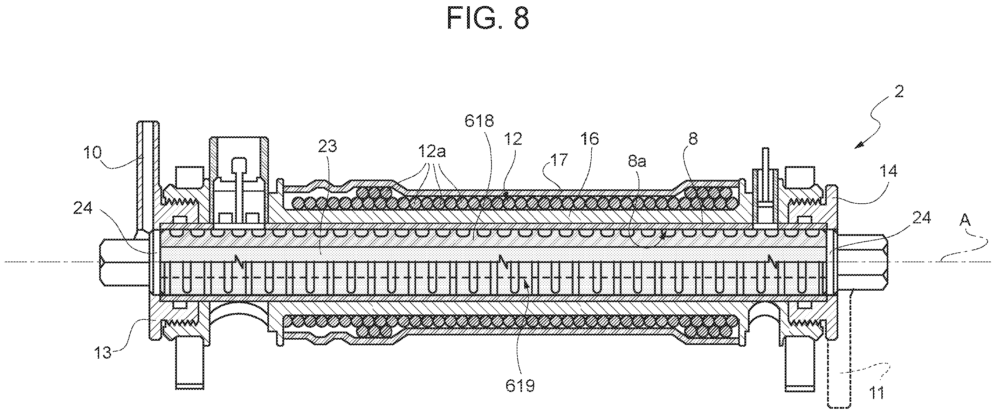

With reference to Figure 8, a seventh preferred embodiment of the heater 2 will now be described according to this invention, for which only the differences with the heater 2 according to the first embodiment will be described and indicating, where possible, similar or the same components or parts with the same reference numbers.

The components not explicitly described are to be considered equal, according to form and/or function, to those of the heater 2 described above.

The heater 2 in accordance with this fifth embodiment includes an insert 618 that defines, together with the tubular body 8 and as described above, a flow channel 619.

The insert 618 basically corresponds to the insert 18 described above. Thus, the flow channel 619 includes a series of transverse sectors interspersed with elbow sectors so as to define said zigzag trajectory, with the above-mentioned, resulting advantages.

The insert 618 differs from the insert 18 due to the fact that it is hollow and includes an axial through cavity 23, which fluidly communicates with the flow channel 619 on one side and with the inlet 10 or the outlet 11 on the opposite side, so as to define an initial or terminal stretch of the flow channel 619.

The cavity 23 thus defines an extension of the flow channel 619.

Conveniently, the cavity 23 is fluidically connected with the flow channel 619 via an elbow passage 24 (in Figure 8, both the possible elbow passages 24 are identified, one at the inlet 10 and one at the outlet 11), so that the travel direction of the fluid along the cavity 23 is opposite to the travel direction of the fluid inside the flow channel 619.

This configuration causes an additional change in the orientation of the fluid flow within the tubular body (at the respective elbow passage 24). The degree of turbulence in the motion of the fluid is, thus, additionally increased, with an improvement in the efficiency of thermal exchange.

From an examination of the features of the heater 2 produced according to this invention, the advantages that it enables are clear.

In particular, thanks to the particular zigzag configuration of at least part of the flow channel 19, 119, 219, 319, 419, 519, 619, the fluid completes a significantly longer path inside the tubular body 8, compared to the example in which the flow of fluid flows axially in a linear way. This enables the precise control of the fluid temperature.

This enables a greater thermal exchange time interval (and, thus, more effective heating) and a precise control of the temperature of the fluid.

In addition, the zigzag trajectory (otherwise defined as a "labyrinth"), with the alternating of straight sections and sharp, curved deviations increases the turbulence of the flow of fluid inside the flow channel. The establishment of this turbulent motion, or, in any case, the increase in the degree of turbulence of the fluid flow inside the flow channel, increases the efficiency of thermal exchange between the tubular body 8 heated via electromagnetic induction by the winding 12 and the fluid that flows inside the flow channel.

The particular shape of the flow channel tends, in addition, to cause the fluid to slow down locally, thus increasing the acquisition of heat by the same.

It is clear that changes may be made to the heater 2 described and illustrated herein, and variations produced thereto, without, for this reason, departing from the scope of protection defined by the claims.

## Claims

1. An electromagnetic induction continuous-flow fluid heater (2), in particular for an automatic beverage vending machine (1);
the heater (12) comprises:
- a tubular body (8) having a longitudinal axis (A) and including at least one inlet (10), which is configured to receive fluid to be heated and to feed it inside the tubular body (8), and an outlet (11), through which the heated fluid flows out, in use, from the tubular body (8); and
- an electrical winding (12), which is wound around the tubular body (8) and electrically powerable to generate an electromagnetic induction field;
the tubular body (8) is made of an electrically conductive material such as to heat up by electromagnetic induction due to the effect of said electromagnetic induction field;
the heater further comprises a flow channel (19, 119, 219, 319, 419, 519, 619) for the fluid which fluidically connects the inlet (10) with the outlet (11) and is delimited by the outer lateral surface (18a) of the insert (18) and the inner lateral surface (8a) of the tubular body (8); **characterized in that** the heater (2) further comprises a non-calorigenic insert (18, 118, 218, 318, 418, 518, 618) made of electrically non-conductive material with zero magnetic susceptibility, which axially engages the tubular body (8) and extends along the longitudinal axis (A) and
the flow channel (19, 119, 219, 319, 419, 519, 619) extends around the longitudinal axis (A) and along a trajectory that proceeds, at least in part from the inlet (10) towards the outlet (11), in a zigzag pattern or zigzagging.

2. The heater as claimed in claim 1, wherein the flow channel (19, 319, 419, 619) comprises a series of transverse sectors (19a, 319a, 419a, 619a) which are transversal, and in particular orthogonal, to the longitudinal axis (A) and are respectively interspersed with elbow sectors (19b, 319b, 419b, 619b), in such a way as to define said zigzag trajectory and in such a way that the orientations of the flow of the fluid flowing, inside the flow channel (19, 319, 419, 619), in use and with respect to the longitudinal axis (A), are opposite to one other in each pair of successive transverse sectors (19a, 319a, 419a, 619a).

3. The heater as claimed in claim 2, wherein the insert (18, 318, 418, 618) has a substantially cylindrical or semi-cylindrical shape having the longitudinal axis (A) as its central axis;
wherein each transverse sector (19a, 319a, 419a, 619a) is fluidically connected to the immediately adjacent transverse sectors (19a, 319a, 419a, 619a) via an upstream elbow sector (19b, 319b, 419b, 619b) and a downstream elbow sector (19b, 319b, 419b, 619b);
wherein each transverse sector (19a, 319a, 419a, 619a) extends circumferentially around the longitudinal axis (A), thereby defining an arc-shaped stretch of said trajectory around the longitudinal axis (A) and oriented transversely, in particular orthogonally, with respect to the longitudinal axis (A),
and wherein the fluid is configured to flow along each respective transverse sector (19a, 319a, 419a, 619a) in the direction opposite to the direction of the flow of the fluid of the transverse sectors (19a, 319a, 419a, 619a) immediately adjacent to said respective transverse sector.

4. The heater as claimed in claim 1, wherein the flow channel (119, 219, 519) comprises a series of straight sectors (119a, 219a, 519a) extending substantially parallel to the longitudinal axis (A) and respectively interspersed with elbow sectors (119b, 219b, 519b) transversal, in particular orthogonal, to the longitudinal axis (A), in such a way as to define said zigzag trajectory and in such a way that the orientations of the flow of the fluid flowing inside the flow channel (119, 219, 519), in use and with respect to the longitudinal axis (A), are opposite to one another in each pair of successive straight sectors (119a, 219a, 519a).

5. The heater as claimed in any of the preceding claims, wherein the flow channel (19, 119, 219, 319, 419, 519, 619) is defined by a continuous groove formed on the outer surface (18a) of the insert (18, 118, 218, 318, 418, 518, 618) and closed at the top by the inner surface (8a) of the tubular body (8).

6. The heater as claimed in any one of the preceding claims, and comprising at least two said inserts (218, 318) housed inside the tubular body (8) and extending along the longitudinal axis (A);
wherein each insert (218, 318) defines a respective said flow channel (219, 319), so that the fluid flows, in use, from the inlet (10) towards the outlet (11) along at least two said zigzag trajectories in parallel.

7. The heater as claimed in any of the preceding claims, wherein the insert (418, 518) comprises a first portion (420, 520), along which the trajectory of the flow channel (419, 519) proceeds in a zigzag pattern or zigzagging, and a second portion (421, 521), along which the trajectory of the flow channel proceeds helically around the longitudinal axis (A);
the second portion (421, 521) is arranged at one of the two axial ends of the insert (418, 518), at the inlet (10) or at the outlet (11);
the heater (2) comprises a helical spring (22) housed inside the tubular body (8), arranged around the second portion (421, 521) and interposed between the tubular body (8) and the second portion (421, 521 ) of the insert, with respect to a direction orthogonal to the longitudinal axis (A);
wherein the flow channel (419, 519) along the second portion (421, 521) is delimited, with respect to said direction orthogonal to the longitudinal axis (A), inferiorly by the outer surface of the insert (418, 518), superiorly by the inner surface (8a) of the tubular body (8) and laterally by the helical spring (22);
and wherein the helical spring (22) is arranged, in use inside the tubular body (8), in a compressed condition with a predetermined preload.

8. The heater as claimed in claim 7, and comprising a first closing flange (13) for closing a first axial end of the tubular body (8), and a second closing flange (14) for closing a second axial end of the tubular body (8 ) opposite to the first axial end;
wherein the helical spring (22) is arranged in abutment against the first flange (13) and biases the insert (418, 518) against the second flange (14), so that the removal of the second flange (14) causes the arrangement of the helical spring (22) in an expanded condition and the at least partial exit of the insert (418, 518) from the tubular body (8).

9. The heater as claimed in any of the preceding claims, wherein the insert (618) is hollow and has a through axial cavity (23) fluidly connected with the flow channel (619) on one side and with the inlet (10) or the outlet (11) on the opposite side, so as to define an initial or terminal stretch of the flow channel (619) itself;
the axial cavity (23) is fluidly connected to the flow channel (619) via an elbow section (24), so that the direction of flow of the fluid along the axial cavity (23) is opposite to the direction of flow of the fluid inside the flow channel (619).

10. An automatic vending machine (1) for the production of hot beverages comprising:
- a continuous-flow electromagnetic induction fluid heater (2) as claimed in any of the preceding claims;
- a fluidic feeding circuit (3) fluidly connected to the heater (2) to feed a flow of fluid thereto; and
- an electric power supply circuit (7) electrically connected to the winding (12) for electrically powering it.

## Patentansprüche

1. Elektromagnetische Durchfluss-Fluid-Heizung (2), insbesondere für einen automatischen Getränkeautomaten (1);
wobei die Heizung (2) Folgendes umfasst:
- einen rohrförmigen Körper (8) mit einer Längsachse (A), der mindestens einen Einlass (10), der konfiguriert ist, um erwärmende Fluide aufzunehmen und in das Innere des rohrförmigen Körpers (8) zu leiten, sowie einen Auslass (11) aufweist, durch den die erwärmte Flüssigkeit im Betrieb aus dem rohrförmigen Körper (8) austritt; und
- eine elektrische Wicklung (12), die um den rohrförmigen Körper (8) gewickelt ist und durch Speisung ein elektromagnetisches Induktionsfeld erzeugen kann;
wobei der rohrförmige Körper (8) aus einem elektrisch leitfähigen Material besteht, das sich durch elektromagnetische Induktion aufgrund der Auswirkung des elektromagnetischen Induktionsfeldes erwärmt;
wobei die Heizung ferner einen Strömungskanal (19, 119, 219, 319, 419, 519, 619) für das Fluid umfasst, das den Einlass (10) mit dem Auslass (11) fluidisch verbindet und durch die äußere Seitenfläche (18a) des Einsatzes (18) und die innere Seitenfläche (8a) des rohrförmigen Körpers (8) begrenzt ist; **dadurch gekennzeichnet, dass** die Heizung (2) ferner einen nicht-wärmeerzeugenden Einsatz (18, 118, 218, 318, 418, 518, 618) aus elektrisch nichtleitendem Material mit einer magnetischen Suszeptibilität von Null umfasst, der axial in den rohrförmigen Körper (8) eingreift und sich entlang der Längsachse (A) erstreckt, und
der Strömungskanal (19, 119, 219, 319, 419, 519, 619) entlang der Längsachse (A) und entlang einer Bahn verläuft, die mindestens teilweise vom Einlass (10) zum Auslass (11) verläuft, und zwar in einem Zickzackmuster oder zickzackförmig.

2. Heizung nach Anspruch 1, wobei der Strömungskanal (19, 319, 419, 619) eine Reihe von Quersektoren (19a, 319a, 419a, 619a) umfasst, die quer und insbesondere orthogonal zur Längsachse (A) verlaufen und jeweils mit Biegesektoren (19b, 319b, 419b, 619b) durchsetzt sind, wie es die genannte Zickzackbahn definiert, und wie es die Ausrichtungen des Fluids im Strömungskanal (19, 319, 419, 619) verwendet und im Hinblick auf die Längsachse (A) in jedem Paar aufeinanderfolgender Quersektoren (19a, 319a, 419a, 619a) einander entgegengesetzt sind.

3. Heizung nach Anspruch 2, wobei der Einsatz (18, 318, 418, 618) eine im Wesentlichen zylindrische oder halbzylindrische Form aufweist, deren Längsachse (A) als Mittelachse dient;
wobei jeder Quersektor (19a, 319a, 419a, 619a) mit den unmittelbar benachbarten Quersektoren (19a, 319a, 419a, 619a) über einen stromaufwärtigen Krümmerabschnitt (19b, 319b, 419b, 619b) und einen stromabwärtigen Krümmerabschnitt (19b, 319b, 419b, 619b) fluidisch verbunden ist;
wobei sich jeder Quersektor (19a, 319a, 419a, 619a) in Umfangsrichtung um die Längsachse (A) dehnt und wodurch einen bogenförmigen Abschnitt der genannten Bahn um die Längsachse (A) definiert wird, der quer, insbesondere orthogonal, im Hinblick auf die Längsachse (A) ausgerichtet ist,
und wobei das Fluid konfiguriert ist, dass es entlang jedes jeweiligen Quersektors (19a, 319a, 419a, 619a) in der Richtung strömt, die der Strömungsrichtung des Fluids der unmittelbar benachbarten Quersektoren (19a, 319a, 419a, 619a) entgegengesetzt ist.

4. Heizung nach Anspruch 1, wobei der Strömungskanal (119, 219, 519) eine Reihe von geraden Abschnitten (119a, 219a, 519a), die sich im Wesentlichen parallel zur Längsachse (A) erstrecken und jeweils mit Bogenabschnitten (119b, 219b, 519b) durchsetzt sind, die quer, insbesondere orthogonal, zur Längsachse (A) verlaufen, derart, dass die genannte Zickzackbahn definiert wird, und derart, dass die Ausrichtungen des Fluids, das im Strömungskanal fließt, (119, 219, 519) benutzt und im Hinblick auf die Längsachse (A) in jedem Paar aufeinanderfolgender gerader Abschnitte (119a, 219a, 519a) einander entgegengesetzt sind.

5. Heizung nach einem der vorstehenden Ansprüche, wobei der Strömungskanal (19, 119, 219, 319, 419, 519, 619) durch eine durchgehende Nut gebildet wird, die an der Außenfläche (18a) des Einsatzes (18, 118, 218, 318, 418, 518, 618) ausgebildet ist und oben durch die Innenfläche (8a) des rohrförmigen Körpers (8) verschlossen ist.

6. Heizung nach einem der vorstehenden Ansprüche, umfassend mindestens zwei der genannten Einsätze (218, 318), die im Inneren des rohrförmigen Körpers (8) untergebracht sind und sich entlang der Längsachse (A) erstrecken;
wobei jeder Einsatz (218, 318) einen jeweiligen Strömungskanal (219, 319) definiert, so dass das Fluid beim Benutzen vom Einlass (10) zum Auslass (11) entlang mindestens zweier paralleler Zickzack-Verlaufswege strömt.

7. Heizung nach einem der vorstehenden Ansprüche, wobei der Einsatz (418, 518) einen ersten Abschnitt (420, 520), entlang dem der Verlauf des Strömungskanals (419, 519) in einem Zickzackmuster oder zickzackförmig verläuft, und einen zweiten Abschnitt (421, 521), entlang dessen der Verlauf des Strömungskanals spiralförmig um die Längsachse (A) verläuft;
der zweite Abschnitt (421, 521) an einem der beiden axialen Enden des Einsatzes (418, 518), am Einlass (10) oder am Auslass (11), angeordnet ist;
die Heizung (2) eine Schraubenfeder (22) umfasst, die im Inneren des rohrförmigen Körpers (8) im Gehäuse untergebracht ist, um den zweiten Abschnitt (421, 521) herum angeordnet ist und in einer zur Längsachse (A) orthogonalen Richtung zwischen dem rohrförmigen Körper (8) und dem zweiten Abschnitt (421, 521) des Einsatzes zwischengesetzt ist;
wobei der Strömungskanal (419, 519) entlang des zweiten Abschnitts (421, 521) im Hinblick auf die zur Längsachse (A) orthogonale Richtung unten durch die Außenfläche des Einsatzes (418, 518), oben durch die Innenfläche (8a) des rohrförmigen Körpers (8) und seitlich durch die Schraubenfeder (22) begrenzt ist;
und wobei die Schraubenfeder (22) beim Verwenden des rohrförmigen Körpers (8) in einem zusammengedrückten Zustand mit einer vorbestimmten Vorspannung angeordnet ist.

8. Heizung nach Anspruch 7, umfassend einen ersten Verschlussflansch (13) zum Verschließen eines ersten axialen Endes des rohrförmigen Körpers (8) und einen zweiten Verschlussflansch (14) zum Verschließen eines dem ersten axialen Ende gegenüberliegenden zweiten axialen Endes des rohrförmigen Körpers (8);
wobei die Schraubenfeder (22) an dem ersten Flansch (13) anliegend angeordnet ist und den Einsatz (418, 518) gegen den zweiten Flansch (14) vorspannt, sodass das Entfernen des zweiten Flansches (14) bewirkt, dass die Schraubenfeder (22) in einen entfalteten Zustand anordnet und der Einsatz (418, 518) mindestens teilweise aus dem rohrförmigen Körper (8) austritt.

9. Heizung nach einem der vorstehenden Ansprüche, wobei der Einsatz (618) hohl ist und einen durchgehenden axialen Hohlraum (23) aufweist, der auf der einen Seite mit dem Strömungskanal (619) und auf der gegenüberliegenden Seite mit dem Einlass (10) oder dem Auslass (11) in Fluidverbindung steht, um so einen Anfangs- oder Endabschnitt des Strömungskanals (619) selbst zu bilden;
der axiale Hohlraum (23) über einen Krümmerabschnitt (24) mit dem Strömungskanal (619) verbunden ist, so dass die Strömungsrichtung des Fluids entlang des axialen Hohlraums (23) entgegengesetzt zur Strömungsrichtung des Fluids innerhalb des Strömungskanals (619) verläuft.

10. Heißgetränkeautomat (1) zur Zubereitung von Heißgetränken, umfassend:
- eine elektromagnetische Durchfluss-Heizung (2) nach einem der vorstehenden Ansprüche;
- einen fluidischen Zuführkreislauf (3), der fluidisch mit der Heizvorrichtung (2) verbunden ist, um dieser einen Fluidstrom zuzuführen; und
- eine Stromversorgung (7), die elektrisch mit der Wicklung (12) verbunden ist, um diese mit Strom zu speisen.

## Revendications

1. Dispositif de chauffage (2) de fluide à écoulement continu par induction électromagnétique, en particulier pour un distributeur automatique de boissons (1) ;
le dispositif de chauffage (2) comprend :
- un corps tubulaire (8) ayant un axe longitudinal (A) et incluant au moins une entrée (10), qui est configurée pour recevoir un fluide à chauffer et pour l'introduire à l'intérieur du corps tubulaire (8), et une sortie (11), par laquelle le fluide chauffé s'écoule en sortie, en utilisation, du corps tubulaire (8) ; et
- un enroulement électrique (12), qui est enroulé autour du corps tubulaire (8) et apte à être électriquement alimenté pour générer un champ d'induction électromagnétique ;
le corps tubulaire (8) est constitué d'un matériau électriquement conducteur de façon à ce qu'il s'échauffe par induction électromagnétique sous l'effet dudit champ d'induction électromagnétique ;
le dispositif de chauffage comprend en outre un canal d'écoulement (19, 119, 219, 319, 419, 519, 619) pour le fluide qui raccorde de manière fluidique l'entrée (10) à la sortie (11) et est délimité par la surface latérale externe (18a) de l'insert (18) et la surface latérale interne (8a) du corps tubulaire (8) ; **caractérisé en ce que** le dispositif de chauffage (2) comprend en outre un insert non calorigène (18, 118, 218, 318, 418, 518, 618) constitué de matériau électriquement non conducteur doté d'une susceptibilité magnétique nulle, qui se met en prise de manière axiale avec le corps tubulaire (8) et s'étend le long de l'axe longitudinal (A) et
le canal d'écoulement (19, 119, 219, 319, 419, 519, 619) s'étend autour de l'axe longitudinal (A) et le long d'une trajectoire qui progresse, au moins en partie de l'entrée (10) vers la sortie (11), selon un motif en zigzag ou en zigzaguant.

2. Dispositif de chauffage selon la revendication 1, dans lequel le canal d'écoulement (19, 319, 419, 619) comprend une série de secteurs transversaux (19a, 319a, 419a, 619a) qui sont transversaux, et en particulier orthogonaux, à l'axe longitudinal (A) et sont respectivement entrecoupés de secteurs coudés (19b, 319b, 419b, 619b), de manière à définir ladite trajectoire en zigzag et de manière à ce que les orientations de l'écoulement du fluide s'écoulant à l'intérieur du canal d'écoulement (19, 319, 419, 619), en utilisation et par rapport à l'axe longitudinal (A), soient opposées l'une à l'autre dans chaque paire de secteurs transversaux (19a, 319a, 419a, 619a) successifs.

3. Dispositif de chauffage selon la revendication 2, dans lequel l'insert (18, 318, 418, 618) possède une forme sensiblement cylindrique ou semi-cylindrique ayant l'axe longitudinal (A) pour son axe central ;
dans lequel chaque secteur transversal (19a, 319a, 419a, 619a) est raccordé de manière fluidique aux secteurs transversaux (19a, 319a, 419a, 619a) immédiatement adjacents par le biais d'un secteur coudé (19b, 319b, 419b, 619b) amont et d'un secteur coudé (19b, 319b, 419b, 619b) aval ;
dans lequel chaque secteur transversal (19a, 319a, 419a, 619a) s'étend de manière circonférentielle autour de l'axe longitudinal (A), ce qui définit un tronçon de forme arquée de ladite trajectoire autour de l'axe longitudinal (A) et orienté transversalement, en particulier orthogonalement, par rapport à l'axe longitudinal (A),
et dans lequel le fluide est configuré pour s'écouler le long de chaque secteur transversal (19a, 319a, 419a, 619a) respectif dans la direction opposée à la direction de l'écoulement du fluide des secteurs transversaux (19a, 319a, 419a, 619a) immédiatement adjacents audit secteur transversal respectif.

4. Dispositif de chauffage selon la revendication 1, dans lequel le canal d'écoulement (119, 219, 519) comprend une série de secteurs rectilignes (119a, 219a, 519a) s'étendant sensiblement parallèlement à l'axe longitudinal (A) et respectivement entrecoupés de secteurs coudés (119b, 219b, 519b) transversaux, en particulier orthogonaux, à l'axe longitudinal (A), de manière à définir ladite trajectoire en zigzag et de manière à ce que les orientations de l'écoulement du fluide s'écoulant à l'intérieur du canal d'écoulement (119, 219, 519), en utilisation et par rapport à l'axe longitudinal (A), soient opposées l'une à l'autre dans chaque paire de secteurs rectilignes (119a, 219a, 519a) successifs.

5. Dispositif de chauffage selon l'une quelconque des revendications précédentes, dans lequel le canal d'écoulement (19, 119, 219, 319, 419, 519, 619) est défini par une rainure continue formée sur la surface externe (18a) de l'insert (18, 118, 218, 318, 418, 518, 618) et fermée sur le haut par la surface interne (8a) du corps tubulaire (8).

6. Dispositif de chauffage selon l'une quelconque des revendications précédentes, et comprenant au moins deux dits inserts (218, 318) logés à l'intérieur du corps tubulaire (8) et s'étendant le long de l'axe longitudinal (A) ;
dans lequel chaque insert (218, 318) définit un dit canal d'écoulement (219, 319) respectif, de sorte que le fluide s'écoule, en utilisation, de l'entrée (10) vers la sortie (11) le long d'au moins deux dites trajectoires en zigzag en parallèle.

7. Dispositif de chauffage selon l'une quelconque des revendications précédentes, dans lequel l'insert (418, 518) comprend une première portion (420, 520), le long de laquelle la trajectoire du canal d'écoulement (419, 519) progresse selon un motif en zigzag ou en zigzaguant, et une seconde portion (421, 521), le long de laquelle la trajectoire du canal d'écoulement progresse en hélice autour de l'axe longitudinal (A) ;
la seconde portion (421, 521) est agencée à l'une des deux extrémités axiales de l'insert (418, 518), à l'entrée (10) ou à la sortie (11) ;
le dispositif de chauffage (2) comprend un ressort hélicoïdal (22) logé à l'intérieur du corps tubulaire (8), agencé autour de la seconde portion (421, 521) et interposé entre le corps tubulaire (8) et la seconde portion (421, 521) de l'insert, par rapport à une direction orthogonale à l'axe longitudinal (A) ;
dans lequel le canal d'écoulement (419, 519) le long de la seconde portion (421, 521) est délimité, par rapport à ladite direction orthogonale à l'axe longitudinal (A), inférieurement par la surface externe de l'insert (418, 518), supérieurement par la surface interne (8a) du corps tubulaire (8) et latéralement par le ressort hélicoïdal (22) ;
et dans lequel le ressort hélicoïdal (22) est agencé, en utilisation à l'intérieur du corps tubulaire (8), dans un état comprimé avec une précontrainte prédéterminée.

8. Dispositif de chauffage selon la revendication 7, et comprenant une première bride de fermeture (13) pour la fermeture d'une première extrémité axiale du corps tubulaire (8), et une seconde bride de fermeture (14) pour la fermeture d'une seconde extrémité axiale du corps tubulaire (8) opposée à la première extrémité axiale ;
dans lequel le ressort hélicoïdal (22) est agencé en butée contre la première bride (13) et sollicite l'insert (418, 518) contre la seconde bride (14), de sorte que le retrait de la seconde bride (14) entraîne l'agencement du ressort hélicoïdal (22) dans un état étendu et la sortie au moins partielle de l'insert (418, 518) du corps tubulaire (8).

9. Dispositif de chauffage selon l'une quelconque des revendications précédentes, dans lequel l'insert (618) est creux et possède une cavité axiale traversante (23) raccordée de manière fluidique au canal d'écoulement (619) sur un côté et à l'entrée (10) ou à la sortie (11) sur le côté opposé, de façon à définir un tronçon initial ou terminal du canal d'écoulement (619) lui-même ;
la cavité axiale (23) est raccordée de manière fluidique au canal d'écoulement (619) par le biais d'une section coudée (24), de sorte que la direction d'écoulement du fluide le long de la cavité axiale (23) soit opposée à la direction d'écoulement du fluide à l'intérieur du canal d'écoulement (619).

10. Distributeur automatique (1) pour la production de boissons chaudes comprenant :
- un dispositif de chauffage (2) de fluide à écoulement continu par induction électromagnétique selon l'une quelconque des revendications précédentes ;
- un circuit d'introduction fluidique (3) raccordé de manière fluidique au dispositif de chauffage (2) pour introduire un écoulement de fluide dans celui-ci ; et
- un circuit d'alimentation électrique (7) électriquement connecté à l'enroulement (12) pour l'alimenter électriquement.
